# EUROPEAN PATENT APPLICATION

(11) **EP 1 912 165 A2**
(43) Date of publication of application: **16.04.2008**
(21) Application number: 07112133.9
(22) Date of filing: 10.07.2007
(51) Int. Cl.: G06Q 10/00

(54) **Workflow selection process and system**

(30) Priority: 14.07.2006 US 457474
(71) Applicant: Xerox Corporation, Rochester, NY 14644 (US)
(72) Inventor: Pangrazio III, Donald M., Leroy, NY 14482 (US); Leone III, Anthony J., Pittsford, NY 14534 (US); Evan, Michael J., Webster, NY 14580 (US); Hazelton, Kimberly Jean, Rochester, NY 14626 (US)
(74) Representative: Grünecker, Kinkeldey, Stockmair & Schwanhäusser Anwaltssozietät

(57) **Abstract**

The invention relates to a system for performing a workflow on an electronic document, the system comprising:
an electronic document access module; and
one or more workflow implementation modules, wherein each workflow implementation module is configured to perform a corresponding workflow, wherein each workflow comprises a plurality of operations,
wherein the electronic document access module accesses an electronic document in its native format, displays a representation of one or more workflow implementation modules to the user, receives a selection for a workflow implementation module from the user, and transmits the electronic document in its native format to the selected workflow implementation module, and
wherein the selected workflow implementation module performs the workflow on the electronic document.

## Description

The disclosed embodiments generally pertain to methods and systems for performing document processing. Specifically, the disclosed embodiments pertain to methods and systems for performing operations on an electronic document automatically.

Electronic documents are ubiquitous in work and home environments. Word processing files, graphical images, spreadsheets, electronic mail messages and the like are commonly used to record, display and transfer information.

In a conventional network environment, an electronic document can be printed by selecting a print driver from a list of available print drivers within an application that was used to generate the document. The document is then transmitted to the printer corresponding to the print driver and a digital front end (DFE) application processes the electronic document for printing. One problem with such a conventional printing operation is that pre-processing of the electronic document is not performed.

Workflows have commonly been used to provide a structured process for document creation. A workflow is a process that uses electronic systems to manage and monitor business processes, thus allowing the flow of work between individuals, devices and/or departments to be defined and tracked. A workflow can include the operational aspects of a work process: how tasks are structured, who or what performs them, what their relative order is, how they are synchronized, how information flows to support the tasks and how tasks are being tracked.

In particular, a workflow can be used to describe the movement of a document through a process. A workflow is a predefined plurality of operations used to approve, verify, modify and/or otherwise process an electronic document. Such operations can include file conversion, file merging, missing font detection, graphic resolution checking, error notification, print previewing, automatic job ticket creation, automatic production ticket creation, impositions, page annotations, document bar coding, page ordering, archiving and/or print routing.

Traditionally, workflow operations could only be performed on electronic documents having particular formats known as page description language (PDL). Typically, a user would convert an electronic document to a PDL, such as PostScript (PS), Portable Document Format (PDF), Printer Command Language (PCL) or the like. The user would then send the PDL-formatted document to a workflow for processing.

Manually initiating each step of such document processing is tedious and time-consuming. For example, if a user would like to perform a workflow, the user might conventionally create a PDF document and save the PDF document in a known location using a first application. The user would then initiate a second application that permits the user to browse to the location of the PDF document, select the PDF document, process the selected document using a workflow, and submit the processed document to a printer.

Workflow processing can include operations such as pre-flighting, imposition, ordering and/or the like. Pre-flighting is the analysis of an electronic document to determine whether it conforms to one or more rules. For example, pre-flighting can include validating that an electronic document does not contain errors and/or providing notification if an electronic document does contain errors, checking the formatting for the electronic document and/or verifying an image format, such as by verifying that an image resolution, an image color space and/or an image color profile meet defined parameters. Pre-flighting can also be used to filter and route electronic documents by determining whether a particular condition exists in an electronic document and forwarding it to a particular workflow agent based on the result. If a document does not conform to particular rules, an alert can be sent to a user via, for example, an e-mail or a pop up window, and/or the workflow can be halted prior to completion.

Imposition is a method of providing a special ordering of output images for a document. For example, two pages of an electronic document could be printed on a single sheet side if a magazine is being printed (i.e., a signature imposition). In an alternate example, the same page could be printed twice on a single sheet (i.e., a "two up for two" imposition). Other impositions can also be performed.

Ordering refers to the sequence in which the pages of an electronic document are printed. For example, if a magazine is being produced, two pages are printed on the same side of a sheet of paper. For the outermost page (i.e., the cover), the pages correspond to the front cover and the back cover. Subsequent pages increment the page number of the left page and decrement the page number of the right page to correctly order the pages for production. Other orderings can also be applied.

In addition, automatic job ticket creation and automatic production ticket creation can be performed. Automatic job ticket creation is used to assign particular print features to an electronic document that is sent to a workflow. For example, all electronic documents sent to a particular workflow may be output to a specific printer, printed a particular number of times, or the like. Automatic production ticket creation is used to create a bill of materials for the electronic document.

Other functions can also be performed as part of a workflow for an electronic document including font replacement, document proofing and the like.

Recently, workflow agents have been enabled to accept electronic documents in non-PDL (i.e., native) formats. However, conventional workflow agents that accept native formats still require the user to save a document in its native format and submit it to a hot folder that the workflow agent browses, send it to the workflow agent directly, or perform some other act on it in order to initiate processing by the workflow. Such file manipulation is overly time-consuming for a user.

What is needed is a system and method for automatically submitting an electronic document to a workflow from within a native application.

A further need exists for a system and method for automatically performing document processing operations on an electronic document having a native format.

The present embodiments are directed to solving one or more of the above-listed problems.

As used herein, the singular forms "a," "an," and "the" include plural reference unless the context clearly dictates otherwise. As used herein, the term "comprising" means "including, but not limited to."

In an embodiment, a method of performing a workflow on an electronic document may include accessing an electronic document using a computer application, displaying a representation for each of one or more workflows for selection in the computer application, receiving a selection for a workflow, and performing the selected workflow, including a plurality of operations, on the electronic document.

In an embodiment, a system for performing a workflow on an electronic document may include a processor, a processor-readable storage medium in communication with the processor, and a communications interface in communication with the processor. The processor-readable storage medium may include one or more programming instructions for performing a method for performing a workflow on an electronic document. The method may include accessing an electronic document using a computer application, displaying one or more workflows for selection in the computer application, receiving a selection for a workflow, and performing the selected workflow, including a plurality of operations, on the electronic document.

In an embodiment, a system for performing a workflow on an electronic document may include an electronic document access module and one or more workflow implementation modules. Each workflow implementation module may be configured to perform a corresponding workflow. Each workflow may include a plurality of operations. The electronic document access module may access an electronic document in its native format, display a representation of one or more workflow selection modules to the user, receive a selection for a workflow implementation module from the user, and transmit the electronic document in its native format to the selected workflow implementation module. The selected workflow implementation module may then perform the workflow on the electronic document.

Aspects, features, benefits and advantages of the present invention will be apparent with regard to the following description and accompanying drawings, of which:

FIG. 1 depicts a flow diagram for an exemplary process of performing a workflow on an electronic document according to an embodiment.

FIG. 2 is a block diagram of exemplary internal hardware that may be used to contain or implement program instructions according to an embodiment.

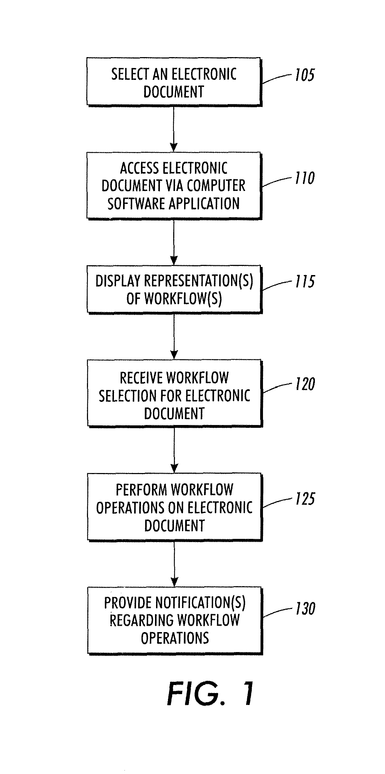

As depicted in FIG. 1, a user may select **105** an electronic document. The electronic document may include, for example and without limitation, a word processing file, a graphical image file, a spreadsheet, an electronic mail message and/or a text file.

In an embodiment, the electronic document may be accessed **110** via a computer software application. The computer software application may perform one or more operations on or with at least a portion of the computer document. For example, computer software applications include, for example and without limitation, Microsoft Word®, Adobe Acrobat® and numerous other programs.

The computer software application may display **115** a representation of one or more workflows when requested by a user. For example, a user may enter a key sequence, select a menu item or the like when the user desires to process a document using a workflow. When the user performs such an operation, a list of available workflows may be displayed **115** to the user. In an embodiment, a list of available printers and workflows may be displayed to a user concurrently. The list of available workflows may include textual or graphical representations for each workflow to enable a user to distinguish between the displayed representations. In an embodiment, a workflow may be represented by a description of the operations performed by the workflow. In an alternate embodiment, a workflow may be represented by a schematic of the operations performed by the workflow. In another alternate embodiment, a workflow may be represented by a user-assigned description for the workflow. Additional and/or alternate methods of displaying and/or initiating the display of workflows will be apparent to those of ordinary skill in the art based upon the present disclosure.

In an embodiment, a workflow may be added to the list of available workflows in a manner similar to that by which a print driver is added to a list of print drivers. For example, an operating system script may be performed to associate an identifier with a particular workflow and provide a path resolution for the workflow to accessing applications. Other methods of generating and/or adding to a list of available workflows will be apparent to those of skill in the art based upon the present disclosure.

A workflow for the electronic document may then be selected **120.** The workflow may be selected **120** via, for example, a drop-down menu, a key sequence, a button press or any other method of selecting an item on a computer known to those of ordinary skill in the art. In an embodiment, selecting **120** the workflow may be performed within the computer software application.

The workflow may perform **125** one or more operations on the electronic document. For example, the workflow may perform **125** operations for determining whether the electronic document conforms to one or more rules, contains one or more errors, has a proper format, has a proper color scheme, and/or the like. The workflow may filter and route the electronic document to one or more of a plurality of workflow agents based on one or more characteristics of the electronic document. The workflow may additionally and/or alternately format and order output images for an electronic document. The ordering and formatting operations may be performed as part of a printing process within the workflow.

In an embodiment, the workflow may include selection of a particular workflow agent based on, for example, a file type of the electronic document. A workflow agent may be a software process used to perform one or more functions of the workflow. Different workflow agents may reside in different files and/or on different machines. Other methods of assigning a workflow agent based upon a file characteristic will be apparent to those of ordinary skill in the art based upon the present disclosure.

If a document does not conform to particular rules, contains errors or cannot be processed by the workflow, a notification may be provided **130** via, for example, an e-mail, a pop up window, a visual and/or audible signal, and/or the like. Alternately and/or additionally, a notification may be provided **130** to provide status information, such as noting that a particular operation has been or is being performed as part of the workflow.

In an embodiment, an icon depicting an operation being performed on the electronic document may be displayed in a graphical user interface. For example, an icon depicting a processing step, a formatting step and/or a printing step of the workflow may be displayed.

In an embodiment, a Microsoft Word® document may be accessed using Microsoft Word® (or any other compatible word processing application). A user may select a workflow from within the Microsoft Word® application in a manner similar to selecting a print function for the document. The workflow may perform one or more operations on the Microsoft Word® document. In an embodiment, one or more of the operations may be user-specified.

In an embodiment, a workflow may be selected directly from a file browser application within an operating system. For example, in a Microsoft Windows Explorer® file browser, a user may right-click on an electronic document, select a print/workflow option and select a workflow to which the electronic document is submitted. In an embodiment, a list of available printers and workflows may be displayed to a user. If a workflow is selected, the workflow may then be performed on the electronic document as described above. Additional and/or alternate methods of directing an electronic document to a workflow from an operating system file browser will be apparent to those of ordinary skill in the art based upon the present disclosure.

In an embodiment, computer software application may be embodied in an electronic document access module and each of one or more workflows may be embodied in corresponding workflow implementation modules. A user may access an electronic document in its native format using the electronic document access module. In an embodiment, the electronic document access module may be used to view, modify, save, etc. the document in its native format. The electronic document access module may further display a representation of the one or more workflow implementation modules to the user. In an embodiment, the display of the representations of the one or more workflow implementation modules may be performed in response to a request from the user. The user may select a workflow implementation module from the representations presented by the electronic document access module, and may transmit the electronic document in its native format to the selected workflow implementation module. The selected workflow implementation module may then perform its workflow on the electronic document. In an embodiment, the selected workflow implementation module may provide one or more notifications to the user regarding an operation substantially as an operation is being performed or upon completion of the operation. In an embodiment, the selected workflow implementation module may provide a notification to the user regarding an error that occurs during the performance of the workflow on the electronic document. In an embodiment, the selected workflow implementation module may select a workflow agent based on the native format of the electronic document.

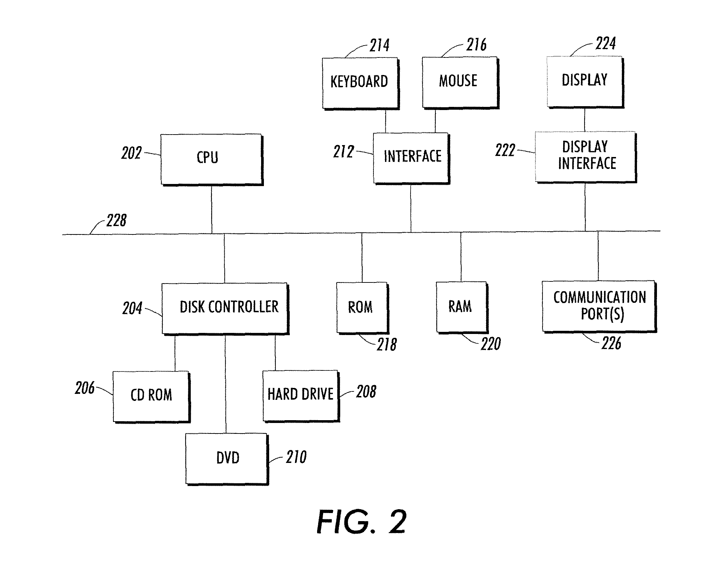

FIG. 2 is a block diagram of exemplary internal hardware that may be used to contain or implement program instructions according to an embodiment. Referring to FIG. 2, a bus **228** may serve as a main information highway interconnecting the other illustrated components of the hardware. CPU **202** is the central processing unit of the system, performing calculations and logic operations required to execute a program. Read only memory (ROM) **218** and random access memory (RAM) **220** constitute exemplary memory devices.

A disk controller **204** interfaces with one or more optional disk drives to the system bus **228.** These disk drives may be external or internal CD ROM drives **206,** hard drives **208** or DVD drives **210.** As indicated previously, these various disk drives and disk controllers are optional devices.

Program instructions may be stored in the ROM **218** and/or the RAM **220.** Optionally, program instructions may be stored on a computer readable medium such as a USB key or a digital disk or other recording medium, a communications signal or a carrier wave.

An optional display interface **222** may permit information from the bus **228** to be displayed on the display **224** in audio, graphic or alphanumeric format. Communication with external devices may optionally occur using various communication ports **226.** An exemplary communication port **226** may be attached to a communications network, such as the Internet or an intranet.

In addition to computer-type components and their equivalents, the hardware may also include an interface **212** which allows for receipt of data from input devices such as a keyboard **214** or other input device **216** such as a remote control, pointer and/or joystick.

A multiprocessor system may optionally be used to perform one, some or all of the operations described herein. Likewise, an embedded system may optionally be used to perform one, some or all of the operations described herein.

## Claims

1. A system for performing a workflow on an electronic document, the system comprising:
an electronic document access module; and
one or more workflow implementation modules, wherein each workflow implementation module is configured to perform a corresponding workflow, wherein each workflow comprises a plurality of operations,
wherein the electronic document access module accesses an electronic document in its native format, displays a representation of one or more workflow implementation modules to the user, receives a selection for a workflow implementation module from the user, and transmits the electronic document in its native format to the selected workflow implementation module, and
wherein the selected workflow implementation module performs the workflow on the electronic document.

2. The system of claim 1 wherein the selected workflow implementation module provides a notification that a particular operation has been performed as part of the workflow.

3. The system of claim 1 wherein the plurality of operations comprises one or more of the following:
determining whether the electronic document conforms to a rule;
determining whether the formatting for the electronic document is proper;
determining whether an image resolution meets one or more defined parameters;
determining whether colors within an image meet one or more defined parameters;
providing a special ordering of output images for the electronic document;
determining a sequence of output images for the electronic document;
replacing one or more fonts within the electronic document; and
proofing the electronic document.

4. The system of claim 1 wherein selected workflow implementation module selects a workflow agent based on the native format of the electronic document.
